Europäisches Patentamt

European Patent Office

Office européen des brevets

(19)

(11) Publication number: **0 528 278 A2**

# EUROPEAN PATENT APPLICATION

(12)

(21) Application number: **92113419.3**

(22) Date of filing: **06.08.92**

(51) Int. Cl.5: **G06F 9/38**, G06F 15/78

(30) Priority: **13.08.91 JP 228799/91**

(43) Date of publication of application:
**24.02.93 Bulletin 93/08**

(84) Designated Contracting States:
**DE FR GB IT**

(71) Applicant: **HITACHI, LTD.**
**6, Kanda Surugadai 4-chome**
**Chiyoda-ku, Tokyo 100(JP)**

(72) Inventor: **Ozawa, Shinichi**
**203, Ogawaso, 2-1261, Ogawa-machi**
**Kodaira-shi, Tokyo(JP)**

(74) Representative: **Strehl, Schübel-Hopf,**
**Groening**
**Maximilianstrasse 54 Postfach 22 14 55**
**W-8000 München 22 (DE)**

(54) Digital signal processor.

(57) A plurality of arithmetic unit cores (2A, 2B) is adapted for general purpose so that they may be used for data and address arithmetic both in the same machine cycle. Further, processing data exchange between the plurality of arithmetic unit cores (2A, 2B) is effected without the aid of a data memory (1).

FIG. 1

EP 0 528 278 A2

## BACKGROUND OF THE INVENTION

The present invention relates generally to data processors and more particularly to technology effectively applicable to a process of computing numerical values of digital data such as technology effectively applicable to a digital signal processor (hereinafter called "DSP").

Attention is increasingly directed to the technology of digitally processing analog signals such as audio or radio signals by means of data processors reduced to micro circuits or so-called micro processors, namely, so-called DSPs. This DSP is advantageous in that digital arithmetic processing is usable for complicated signal processing accurately with excellent reproducibility and that processing specification can freely be designed only with the aid of programs.

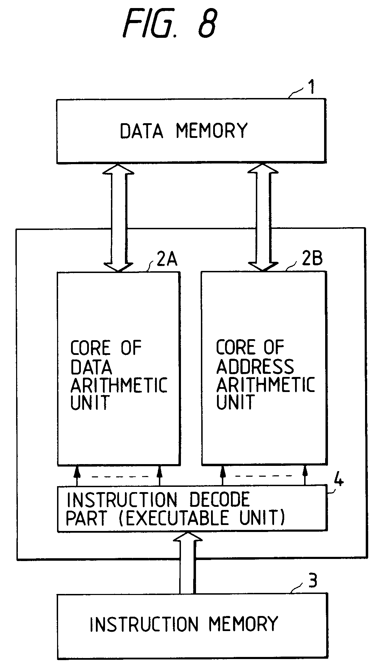

The data processor used for DSP is substantially similar to an ordinary data processing computer and as shown in Fig. 8, comprises a data memory 1, a data arithmetic unit core 2A, an address arithmetic unit core 2B, an instruction memory 3, an instruction decode part 4 and the like.

The data memory 1 stores data to be processed and data on the results of operations. The data arithmetic unit core 2A operates on the data supplied from the data memory 1 and supplies the results of operations.

The address arithmetic unit core 2B is provided to compute read/write addresses of data to be processed with respect to the data memory 1.

The instruction memory 3 stores instruction code strings, that is, programs for making predetermined processing procedures executed.

The instruction decode part 4 analyzes the instruction codes read from the instruction memory 3 one after another and controls each part to cause unit processing corresponding to the instruction code to be executed.

Real-time digital processing of audio and video signals has been made by means of the aforementioned equipment (see "Nikkei Electronics", pp 177 ~ 181, No. 443, March. 21, 1988, for instance).

Moreover, U.S Serial No. 07/384,724 (Filing Date: July 24, 1989) refers to DSP having a plurality of arithmetic units.

## SUMMARY OF THE INVENTION

However, the present inventors have made it clear that there exist the following problems in the prior art technology.

The data processor for carrying out the aforementioned digital processing is required to have extremely high speed processing capability. As a means effective in increasing the processing speed of the prior art data processor, there have been proposed methods of (1) increasing the processor operating frequency and (2) employing a multiprocessor system for operating a plurality of processors in parallel.

However, (1) it is not that simple to increase only the processor operating frequency as the operating frequency is directly dependent on the operating speed of the whole semiconductor device, whereas (2) the multiprocessor system is still problematical in that its large-scale system configuration results in sharply increasing the area of a semiconductor chip for forming a necessary circuit or otherwise making one chip insufficient to accommodate the circuitry. Since the processing data exchange between processors is implemented via the memory in the multiprocessor system, moreover, data-saving and data-loading instructions directed to and from the memory have to be executed frequently. As a result, a number of executing instructions are needed and this tends to reduce processing efficiency.

An object of the present invention is to provide the technology of exchanging data between a plurality of arithmetic unit cores at high speed.

Another object of the present invention is to provide the technology of making data processing including complicated arithmetic operations at high speed by executing a plurality of instructions within one machine cycle with a relatively small-scale system configuration.

The above and other objects and features of the invention will appear more fully hereinafter from a consideration of the following description taken in connection with the accompanying drawings.

The present invention as disclosed in this application will be summarized briefly as follows:

There are provided a plurality of arithmetic unit cores, which are arranged as general purpose arithmetic unit cores for performing any of the data and address processing. Moreover, a core-to-core communication means is provided so that the processing data exchange therebetween is directly made without using a data memory.

In addition, an instruction decoder is provided for decoding a plurality of instructions and outputting control signals to cause the plurality of arithmetic units including the arithmetic unit cores to operate simultaneously within one machine cycle.

With the aforementioned means, the arithmetic core that has heretofore been utilized for address arithmetic is utilized for data arithmetic, whereby processing capability is greatly increased. High-speed processing is thus made possible as the plurality of arithmetic units can simultaneously be operated within one machine cycle. Moreover, the complicated processing while the arithmetic data is exchanged between the processing cores can be made possible with a relatively small number of instructions to be executed without causing data-saving in and data-loading from the memory.

In this way, data processing including complicated arithmetic is effected at high speed.

## BRIEF DESCRIPTION OF THE DRAWINGS

Fig. 1 is a schematic block diagram of a digital signal processor embodying the present invention.

Fig. 2 illustrates a buffer memory for holding data input to an arithmetic unit core in given order.

Fig. 3 illustrates an instruction coding system in the digital signal processor.

Fig. 4 illustrates a flowchart using a digital signal processor according to the present invention in comparison with the prior art example.

Fig. 5 is a processing time chart in reference with the digital signal processor.

Fig. 6 is a block diagram of an apparatus embodying the present invention.

Fig. 7 is a block diagram of another processor embodying the present invention.

Fig. 8 is a block diagram illustrating a conventional digital signal processor.

## DESCRIPTION OF THE PREFERRED EMBODIMENTS

Referring to the accompanying drawings, the preferred embodiment of the present invention will be described. In the drawings, like reference characters designate like or corresponding parts.

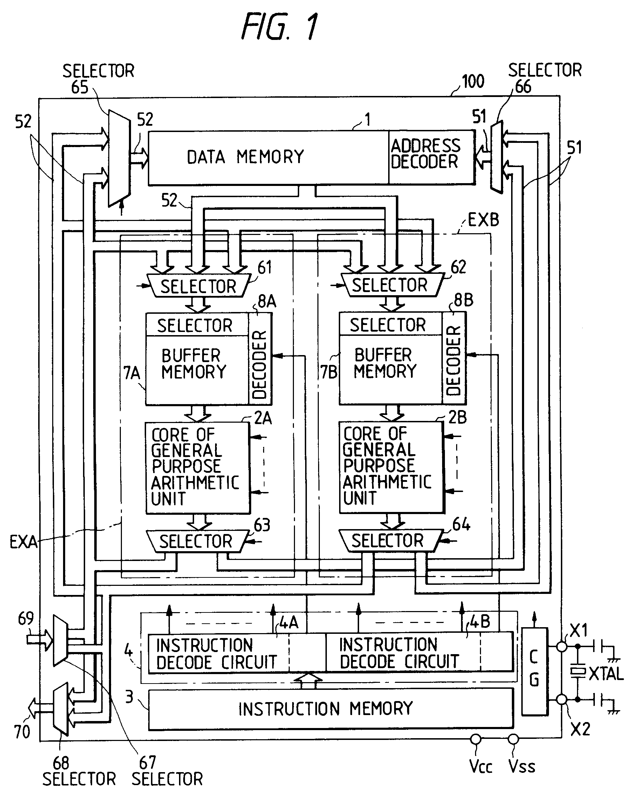

Fig. 1 is a schematic block diagram of a digital signal processor DSP 100 embodying the present invention, wherein a reference character 1 denotes a data memory for storing processing data, the data memory having two arithmetic units EXA, EXB, 2A, 2B arithmetic unit cores, 3 an instruction memory for storing instruction code strings, that is, programs, 4 an instruction decode part for supplying to respective parts data for executing instructions based on the instruction code read from the instruction memory 3 and control signals, 51 an address bus for supplying addresses to the data memory 1, 52 a data bus, 61 ~ 68 selectors (a bus selection circuit), 69 an external input data bus for inputting data from the outside, 70 an external output data bus for outputting data outside, CG a clock generator for a generating clock signal, the clock generator being connected to a quartz-crystal oscillator XTAL outside the data processor 100, each circuit in DSP 100 operating in synchronization with the clock signal, and further 7A, 7B buffer memories for temporarily holding input processing data of the respective arithmetic unit cores 2A, 2B in given order.

External terminals Vcc and Vss are power supply terminals for operating DSP 100: a supply voltage (of about +5 V), for instance, is supplied to the external terminal Vcc and a ground level voltage (of about 0 V) to the external terminal Vss.

The quartz-crystal oscillator is connected to external terminals X1, X2.

The arithmetic unit cores 2A, 2B are not distinguished from each other for their use, namely, for addresses and data, because these are general purpose arithmetic unit cores equally usable for data and address arithmetic. The two general purpose arithmetic unit cores 2A, 2B have been attained by opening address arithmetic unit cores installed in the conventional DSP for data arithmetic. In other words, the conventional address arithmetic unit cores are made to participate in data arithmetic, though the number of arithmetic unit cores itself has not been changed from that of those in the conventional DSP, whereas the conventional data arithmetic unit cores are made to participate in address arithmetic, so that two general purpose arithmetic unit cores 2A, 2B have practically been attained.

In this case, a known technique of manufacturing semiconductor integrated circuits has been used to form DSP 100 on one semiconductor chip of, for instance, monocrystalline silicon.

The selectors 61 ~ 68 are input/output selection means for selecting the input sources and output destinations of the respective arithmetic unit cores 2A, 2B, the external input data bus 69 for receiving data from the outside, and the external output data bus 70 for outputting data outside, respectively. The input/output selection means is controlled by the instruction code read from the instruction memory 3 on one instruction basis. A core-to-core communication means for allowing processing data to be exchanged directly between the two general purpose arithmetic unit cores 2A, 2B without the aid of the data memory 1 is thus formed. With respect to the external input data bus 69 and the external output data bus 70 for external communication are such that all communications may collectively be made by the selectors 67, 68 or otherwise the number of them may be increased by the number of general purpose arithmetic cores.

The buffer memories 7a, 7B, which are juxtaposed on the input sides of the arithmetic unit cores 2A, 2B, temporarily hold processing data before being input to the arithmetic unit cores 2A, 2B, that is, those which are to be processed, at respective addresses from "00" up to "XX" (shift stages).

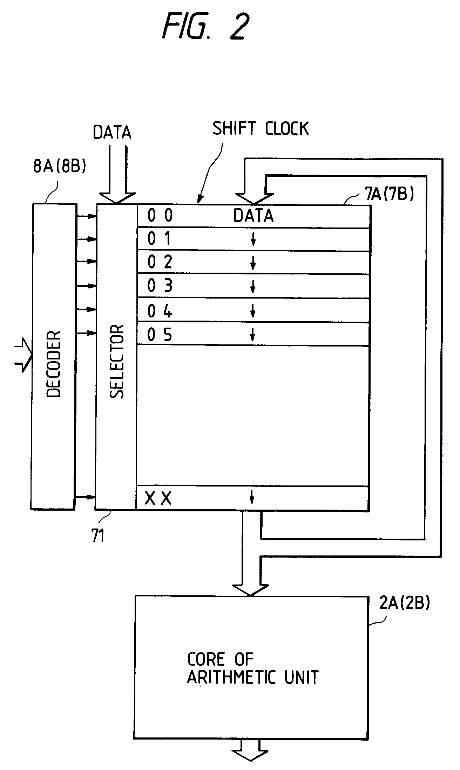

As shown in Fig. 2, the buffer memories 7A, 7B are formed with circulating shift registers or so-called ring buffers and operated by the shift clock generated from the clock generator CG in synchronization with the processing cycle of the arithmetic unit cores 2A, 2B. The data to be processed are temporarily held at the respective addresses (shift stages) from "00" up to "XX" and the data thus held are sequentially input to the arithmetic unit cores 2A, 2B and subjected to arithmetic. In this case, the entry of new data (updating) into the buffer memories 7A, 7B is made in such a way that the decoders 8A, 8B and the selector 71 enter the data at the addresses (shift stages) designated by the instruction codes. Therefore, the input data of the respective arithmetic cores are temporarily held in the input order designated by the instruction codes.

The instruction decode 4 has two decode circuits 4A, 4B corresponding to the arithmetic unit cores 2A, 2B and controls the operation of and processing data transfer by the two arithmetic unit cores 2A, 2B on the basis of one instruction code read from the instruction memory 3.

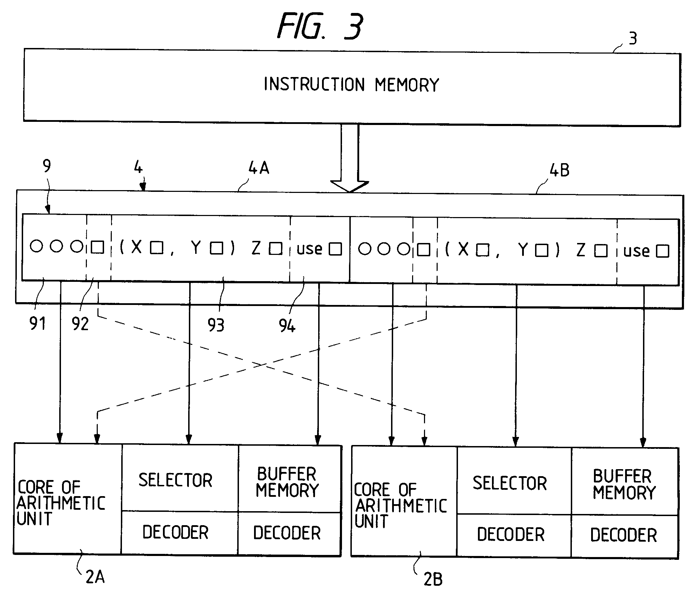

Fig. 3 schematically illustrates an instruction coding system applicable to DSP according to the present invention.

One instruction code 9 for executing one operation is organized on the basis of arithmetic unit cores 2A, 2B by a coding part 91 for instruction the operation of the arithmetic unit core, a coding part 92 for designating the arithmetic unit core, a coding part 93 for designating the data input source and data output destination of the arithmetic unit core, and a coding part 94 for designating a storing address (shift stage) when the arithmetic result is supplied to the buffer memory 7A or 7B. Consequently, two instructions can simultaneously be fetched to the instruction decode part 4.

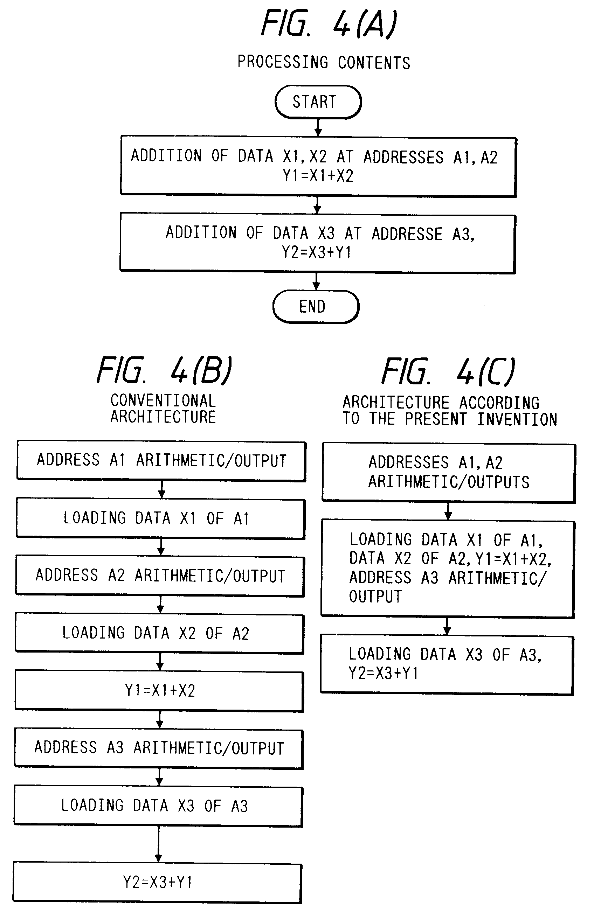

Fig. 4 illustrates a flowchart representing the steps of processing the same contents using an architecture according to the present invention in comparison with the prior art architecture.

As shown in (A) of Fig. 4, data transferred from the data memory is used as an address to be processed. In the conventional architecture, two of the data and address arithmetic unit cores are employed, whereas what contains two of the general purpose arithmetic unit cores is used according to the present invention as set forth above. These two cases are even in that two of the arithmetic unit cores are used.

In the conventional architecture, the address arithmetic unit core is used to read data X1, X2 from the data memory before Y1 = X1 + X2 is executed as the function (use) of each arithmetic unit core is fixed as shown by (B). In the meantime, the data arithmetic unit core remains unoperational. The data arithmetic unit core executes Y1 = X1 + X2 in waiting for the data X1, X2 to be read from the data memory. The address arithmetic unit core is subsequently used to read data X3 from the data memory and then the data arithmetic unit core is used to execute Y2 = X3 + Y1.

In this way, the address and the data arithmetic unit cores are alternately operated in the conventional architecture and the results of execution are indirectly transferred via the data memory to and from the arithmetic unit cores so as to effect the processing. As a result, 8 steps are required to execute the contents of processing as shown in (A) of Fig. 4.

On the contrary, two of the general purpose arithmetic unit cores can be used as address arithmetic units initially and simultaneously as shown in (C) of Fig. 4 as two of them have been used for general purpose in the architecture according to the present invention. Therefore, the memory addresses of X1, X2 can be executed and read at one step and Y1 = X1 + X2 can also be computed at the following step. Y2 = X3 + Y1 using the result of Y1 = X1 + X2 execution can further be executed as the core-to-core communication is made without the aid of the data memory and as the order of inputting data to be processed is designated by the buffer memory.

As set forth above, two of the arithmetic unit cores are operated in parallel in the architecture according to the present invention and each of the cores performs address and data arithmetic both and further uses immediately necessary data/addresses without the aid of the data memory, so that desired processing is performed at the minimized number of steps for a short period of time. With this arrangement, the number of instructions is decreased, whereas the efficiency of developing programs is improved.

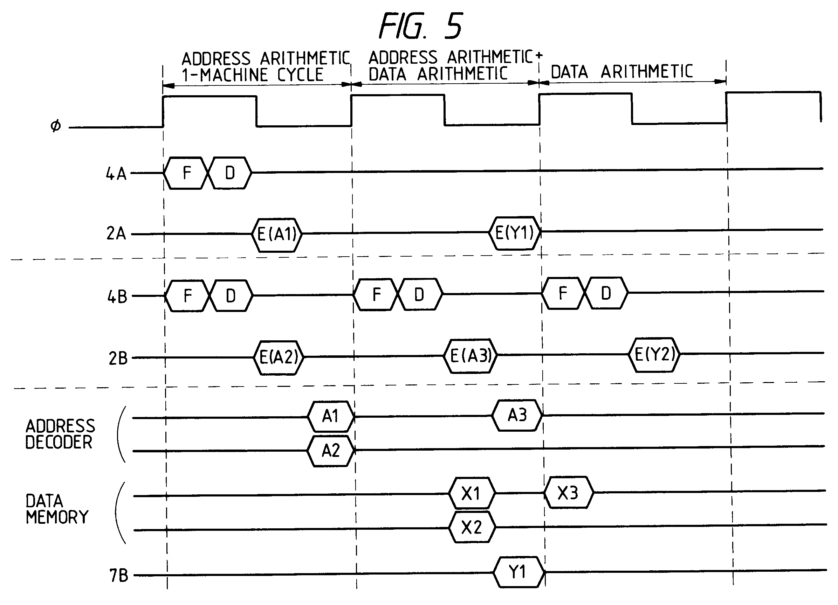

Fig. 5 is a time chart of Fig. 4. One period of clock φ is assumed one machine cycle. First, the instruction decode circuit 4A fetches (F) an instruction from the instruction memory in the initial machine cycle and decodes it (D). The general purpose arithmetic unit core 2A operates on the data decoded in the instruction decode circuit 4A and supplied from the data memory 1 to execute an address A1. The instruction decode circuit 4B fetches (F) an instruction different from what has been fetched by the instruction decode circuit 4A and decodes it (D). The general purpose arithmetic unit core 2B operates on the data decoded in the instruction decode circuit 4B and supplied from the data memory 1 to execute an address A2. The addresses A1, A2 are respectively supplied via the address bus 51 to the address decoder of the data memory. The general purpose arithmetic unit cores 2A, 2B execute the instruction of executing the addresses in parallel in this cycle. The instruction decode circuit 4B fetches (F) an instruction from the instruction memory in the next one machine cycle and decodes (D) it. The general purpose arithmetic unit core 2B operates on the data decoded in the instruction decode circuit 4B and supplied from the data memory 1 to execute an address A3. The address A3 is supplied via the address bus 51 to the address decoder of the data memory. The general purpose arithmetic unit core 2A adds the data X1 at the address A1 to the data X2 at the address A2 output from the data memory and computes the data Y1 thus added up. The resulting data Y1 is stored at a predetermined address of the buffer memory 7B designated by the instruction fetched (D) in the instruction decode circuit 4B. The general purpose arithmetic unit cores 2A, 2B are making data and address arithmetic in parallel in this cycle. The instruction analyzer circuit 4B fetches (F) an instruction from the instruction memory in the last one machine cycle and decode (D) it, whereby the general purpose arithmetic unit core 2B adds the data X3 at the address A3 output from the data memory 1 to the data Y1 output from the buffer memory 7B and executes the data Y2 thus added up. The process performed in (A) of Fig. 4 is implemented in three machine cycles.

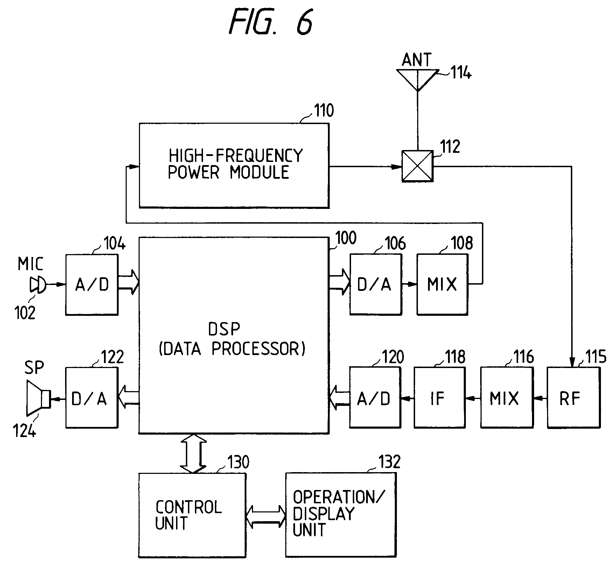

Fig. 6 is a block diagram of an apparatus embodying the present invention.

The communication apparatus shown in Fig. 6 is a radio telephone in which the aforementioned DSP 100 performs digital signal processing.

First, a description will be given of a transmission part. A transmitting signal from a microphone 102 is digitized by an AD converter 104 and supplied to DSP 100 before being processed. At this time, DSP 100 operates as a base band unit and generates a modulation signal such as FM or SSB through mathematical processing. The modulation signal is converted by a DA converter 106 to an analog signal before being radiated from an antenna 114 over the space through a frequency converter 108, a high-frequency power module 110 and an antenna switch 112.

A reception part will subsequently be described. The radio signal caught by the antenna 114 is passed through an antenna switch 112, a high-frequency amplifier 115, a frequency converter 116 and an intermediate frequency amplifier 118, and digitized by an AD converter 120 before being supplied to DSP 100. At this time, DSP 100 operates as a reception demodulation unit and demodulates the modulation signal such as FM OR SSB through mathematical processing. The demodulated signal is converted by a DA converter 122 to an analog signal before being converted by a speaker 124 into sound.

Numeral 130 is a central control unit used to set each operating mode such as a display control mode, this control unit being situated between DSP 100 and an operation/display unit 132.

DSP 100 according to the present invention is capable of directly transmitting modulation signals in high-frequency bands by means of the plurality of arithmetic unit cores for effecting parallel processing, core-to-core communication without the aid of the data memory, the buffer memories for making it free to designate the order of processing data to be input and the like.

Referring to the embodiments of the present invention made by the present inventors, a specific description has been given. However, the present invention is not limited to the aforementioned embodiments but may needless to say be modified in various ways without departing from the scope and spirit of the invention.

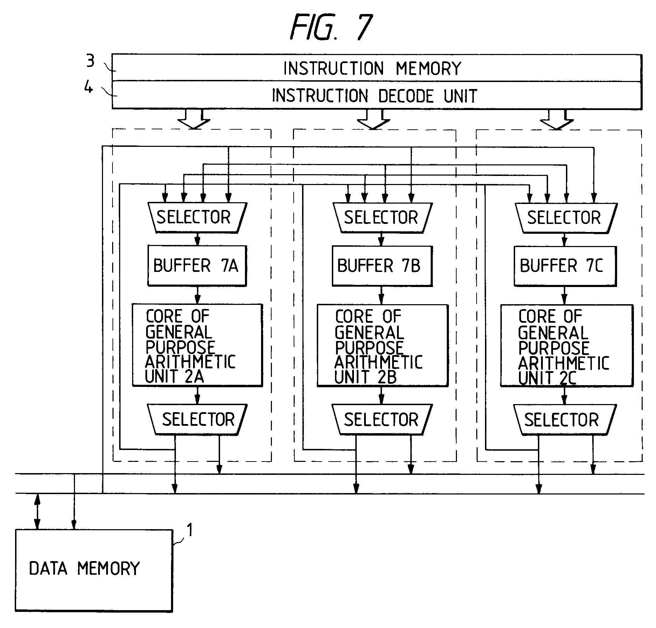

As shown in Fig. 7, for instance, as many as three general purpose arithmetic unit cores 2A, 2B, 2C may be installed together with buffer memories 7A, 7B, 7C for designating arithmetic order, respectively.

Although a description has been given of mainly a case where DSP is applied to a field of its utilization backing up the invention made by the present inventors, the application of the present invention is not limited to the aforementioned embodiments but to pattern matching or pattern recognition.

The present invention applied for a patent may briefly be summarized as follows:

With a relatively small-scale system configuration and a small number of instructions to be executed, data processing including complicated arithmetic can be carried out efficiently at high speed.

## Claims

1. A digital signal processor comprising:

an instruction memory (3) for storing instructions to be executed,

decode means (4) for decoding the instruction supplied from said instruction memory (3) and for outputting a control signal,

arithmetic means (2) for executing the data output from a data memory (1) in response to said control signal, wherein the data memory (1) is supplied with an arithmetic result as an address from the arithmetic means (2), and

buffer memory (7), coupled to said data memory (1) and said arithmetic means (2), which the adderss of the data to be stored under said instruction is designated.

2. The processor of claim 1, wherein said buffer memory (7) includes registers for storing data and a decoder circuit (8) for decoding the control signal, wherein each of the registers is allotted with an address, wherein the decoder circuit (8) designates an address in accordance with the decode result of the control signal and wherein the data in said registers are shifted in accordance with a predetermined clock signal.

3. The processor of claim 2, wherein said decode means (8) simultaneously decodes a plurality of instructions supplied from said instruction memory (3) and outputs said control signal.

4. The processor of claim 3, wherein said arithmetic means (2) has a plurality of arithmetic units (2A, 2B) and executes a predetermined arithmetic operation in response to said control signal.

5. The processor of claim 4, wherein the provision of said buffer memory (7) corresponds to number of said arithmetic units (2A, 2B).

6. The processor of claim 5, wherein selectors (61, 62) are coupled between said data memory (1) and said buffer memory (7) and wherein said selectors (61, 62) supply data from said arithmetic units (2A, 2B) and from one side of said data memory (1) to said buffer memory (7) in response to said control signal from said decode means (8).

7. Use of the digital signal processor of any of claims 1 to 6 in a communication system which comprises an A/D converter (104, 120) and a D/A converter (106, 122).

# FIG. 1

SELECTOR 65

SELECTOR 66

52

52

100

1

51

51

DATA MEMORY

ADDRESS DECODER

52

EXB

52

61

62

SELECTOR

SELECTOR

SELECTOR 8A

SELECTOR 8B

DECODER

DECODER

7A

BUFFER MEMORY

7B

BUFFER MEMORY

2A

2B

CORE OF GENERAL PURPOSE ARITHMETIC UNIT

CORE OF GENERAL PURPOSE ARITHMETIC UNIT

EXA

63

64

SELECTOR

SELECTOR

69

4A

4B

X1

4

INSTRUCTION DECODE CIRCUIT

INSTRUCTION DECODE CIRCUIT

C G

XTAL

3

INSTRUCTION MEMORY

70

X2

68 SELECTOR

67 SELECTOR

Vcc

Vss

# FIG. 2

## FIG. 3

EP 0 528 278 A2

# FIG. 4 (A)

PROCESSING CONTENTS

```
        ( START )
            │
            ▼
┌───────────────────────────────────┐
│ ADDITION OF DATA X1,X2 AT ADDRESSES A1,A2 │
│              Y1=X1+X2                │
└───────────────────────────────────┘
            │
            ▼
┌───────────────────────────────────┐
│ ADDITION OF DATA X3 AT ADDRESSE A3, │
│              Y2=X3+Y1               │
└───────────────────────────────────┘
            │
            ▼
        (  END  )
```

# FIG. 4 (B)

CONVENTIONAL
ARCHITECTURE

```
┌───────────────────────────────────┐
│  ADDRESS A1 ARITHMETIC/OUTPUT       │
└───────────────────────────────────┘
                │
                ▼
┌───────────────────────────────────┐
│    LOADING DATA X1 OF A1            │
└───────────────────────────────────┘
                │
                ▼
┌───────────────────────────────────┐
│  ADDRESS A2 ARITHMETIC/OUTPUT       │
└───────────────────────────────────┘
                │
                ▼
┌───────────────────────────────────┐
│    LOADING DATA X2 OF A2            │
└───────────────────────────────────┘
                │
                ▼
┌───────────────────────────────────┐
│          Y1=X1+X2                   │
└───────────────────────────────────┘
                │
                ▼
┌───────────────────────────────────┐
│  ADDRESS A3 ARITHMETIC/OUTPUT       │
└───────────────────────────────────┘
                │
                ▼
┌───────────────────────────────────┐
│    LOADING DATA X3 OF A3            │
└───────────────────────────────────┘
                │
                ▼
┌───────────────────────────────────┐
│          Y2=X3+Y1                   │
└───────────────────────────────────┘
```

# FIG. 4 (C)

ARCHITECTURE ACCORDING
TO THE PRESENT INVENTION

```
┌───────────────────────────────────┐
│  ADDRESSES A1,A2                    │
│  ARITHMETIC/OUTPUTS                 │
└───────────────────────────────────┘
                │
                ▼
┌───────────────────────────────────┐
│  LOADING DATA X1 OF A1,             │
│  DATA X2 OF A2,Y1=X1+X2,            │
│  ADDRESS A3 ARITHMETIC/             │
│  OUTPUT                             │
└───────────────────────────────────┘
                │
                ▼
┌───────────────────────────────────┐
│  LOADING DATA X3 OF A3,             │
│  Y2=X3+Y1                           │
└───────────────────────────────────┘
```

FIG. 5

## FIG. 6

FIG. 7

INSTRUCTION MEMORY

INSTRUCTION DECODE UNIT

SELECTOR

BUFFER 7A

CORE OF GENERAL PURPOSE ARITHMETIC UNIT 2A

SELECTOR

SELECTOR

BUFFER 7B

CORE OF GENERAL PURPOSE ARITHMETIC UNIT 2B

SELECTOR

SELECTOR

BUFFER 7C

CORE OF GENERAL PURPOSE ARITHMETIC UNIT 2C

SELECTOR

DATA MEMORY

EP 0 528 278 A2

# FIG. 8

DATA MEMORY — 1

CORE OF DATA ARITHMETIC UNIT — 2A

CORE OF ADDRESS ARITHMETIC UNIT — 2B

INSTRUCTION DECODE PART (EXECUTABLE UNIT) — 4

INSTRUCTION MEMORY — 3